# EUROPÄISCHE PATENTSCHRIFT

(11) **EP 3 277 523 B1**
(45) Veröffentlichungstag und Bekanntmachung des Hinweises auf die Patenterteilung: **27.02.2019**
(21) Anmeldenummer: 15805473.4
(22) Anmeldetag: 07.12.2015
(51) Int. Cl.: B60C 11/12

(54) **FAHRZEUGLUFTREIFEN**
PNEUMATIC VEHICLE TYRE
PNEUMATIQUE DE VÉHICULE

(30) Priorität: 31.03.2015 DE 102015205760
(43) Veröffentlichungstag der Anmeldung: 07.02.2018
(73) Patentinhaber: Continental Reifen Deutschland GmbH, 30165 Hannover (DE)
(72) Erfinder: BRANDAU, Christian, 31542 Bad Nenndorf (DE); SCHLITTENHARD, Jan, 30900 Wedemark (DE); SENG, Matthias, 30453 Hannover (DE)
(74) Vertreter: Finger, Karsten
(86) Internationale Anmeldenummer: PCT/EP2015/078772
(87) Internationale Veröffentlichungsnummer: WO 2016/155855

(56) Entgegenhaltungen:
- EP-A2- 0 933 235
- DE-A1-102012 101 149
- JP-A- 2003 118 322

## Beschreibung

Die Erfindung betrifft einen Fahrzeugluftreifen mit einem Laufstreifen mit Profilelementen, wie beispielsweise Profilblöcken oder Profilrippen, wobei zumindest ein Profilelement mit zumindest einem, in Querrichtung verlaufenden, in Draufsicht zumindest über einen Abschnitt seiner Erstreckung wellenförmigen Einschnitt mit zumindest einer Wellenlänge versehen ist, welcher sich unter Beibehalten der Wellenform in radialer Richtung von der Laufstreifenaußenfläche ins Innere des Profilelementes erstreckt, wobei sich die Wellenlänge der Wellenform des Einschnittes ausgehend von der Laufstreifenaußenfläche radial nach innen kontinuierlich vergrößert.

Es ist bekannt und üblich, Laufstreifen von Fahrzeugluftreifen, insbesondere Laufstreifen von Winterreifen, mit Einschnitten verschiedenster Ausgestaltung zu versehen, um dem Reifen einen guten Nass-, Schnee- und Eisgriff zu verleihen. So ist es beispielsweise üblich Einschnitte vorzusehen, die in Draufsicht wellen- oder zickzackförmig verlaufen. Darüber hinaus sind Einschnitte bekannt, deren Einschnittwände mit Erhebungen und Vertiefungen unterschiedlicher Ausgestaltungen versehen sind.

Bei den bisher bekannten Einschnitten ändern sich insbesondere der Schneegriff und die Trockenhandlingeigenschaften des Laufstreifen bzw. der einzelnen Profilelemente im Laufstreifen mit dem Laufstreifenabrieb, da sich die Steifigkeit der Profilelemente in Umfangs- und Querrichtung mit fortschreitendem Abrieb erhöht. Die Zunahme der Steifigkeit wirkt sich nachteilig auf die Winterfahreigenschaften aus, wobei jedoch die Handlingeigenschaften auf trockenem Untergrund verbessert werden. Es ist ferner bekannt, dass durch bestimmte dreidimensionale Ausgestaltungen der Einschnittwände die nachteiligen Auswirkungen auf die Winterfahreigenschaften teilweise kompensiert werden können.

Unabhängig von der dreidimensionalen Ausgestaltung der Einschnittwände bilden sich bei in Draufsicht gerade verlaufenden Einschnitten unter Verformung der Profilblöcke größere Schneetaschen aus als bei in Draufsicht zick-zack oder wellenförmig verlaufenden Einschnitten. Solche Schneetaschen dienen bei winterlichen Fahrbedingungen u.a. dazu, Schnee aufzunehmen, um die Schnee/Schnee-Reibung zu erhöhen und derart den Schneegriff des Reifens zu verbessern. In Draufsicht gerade verlaufende Einschnitte haben sich in Umfangsrichtung als vorteilhaft für die Übertragung von Traktions- und Bremskräften auf Schnee erwiesen. Bei Belastung in seitlicher Richtung können die einzelnen Profilblockelemente, die zwischen den Einschnitten oder zwischen den Einschnitten und den Profilblockkanten gebildet sind, bei gerade verlaufenden Einschnitten aneinander abgleiten, was zu ausgeprägten Verformungen der Profilblockelemente und damit zu schlechten Handlingeigenschaften auf nassem sowie insbesondere auf trockenem Untergrund führt.

Bei in Draufsicht zick-zackförmigen oder wellenförmig verlaufenden Einschnitten verzahnen sich die in den Profilblöcken gebildeten Profilblockelemente. Die den jeweiligen Einschnitt begrenzenden Einschnittwände können sich aneinander abstützen, wodurch die Steifigkeit der Profilblöcke erhöht wird und größere Querkräfte auf den Untergrund übertragen werden können, sodass die Handlingeigenschaften verbessert werden.

Ein Reifen der eingangs genannten Art ist beispielsweise aus der EP 0 933 235 A2 bekannt. Für die in den Profilelementen des Laufstreifens verlaufenden wellenförmigen Einschnitte gilt 0,5 ≤ b/d ≤ 2,0, wobei b die Wellenlänge an der Laufstreifenoberfläche und d die Wellenlänge am Einschnittgrund ist. Solche Einschnitte sollen dem Fahrzeugluftreifen auch bei fortschreitendem Laufstreifenabrieb gute Fahreigenschaften auf nasser Fahrbahn verleihen.

Weiterhin offenbart das Dokument JP 2003 118322 A einen Reifen gemäß dem Oberbegriff des Anspruchs 1.

Ferner ist aus der DE 10 2012 101 149 A1 ein Fahrzeugluftreifen mit einem Laufstreifen mit Profilelementen bekannt, welche mit zumindest einem sich von der Laufstreifenaußenfläche ins Profilelementinnere erstreckenden Einschnitt versehen sind. Der Einschnitt weist korrespondierende Einschnittwände in Form einer sinusförmigen Welle auf, wobei sich die Wellenlänge des Einschnittes - ausgehend von der Laufstreifenaußenfläche in Richtung Profilelementinneres - verringert. Die Eigenschaften dieses Reifens auf Schnee sowie auf trockenem Untergrund sollen besonders ausgewogen sein. Diese gestalterische Ausführung ist jedoch nicht optimal, da durch die Verringerung der Wellenlänge des Einschnittes in Richtung Profilelementinneres die vorhandenen Schneetaschen mit zunehmendem Laufstreifenabrieb kleiner werden, sodass diese immer weniger Schnee aufnehmen können und sich die Wintereigenschaften des Reifens mit zunehmendem Laufstreifenabrieb verschlechtern.

Der Erfindung liegt daher die Aufgabe zugrunde, einen Fahrzeugluftreifen derart zu gestalten, dass seine Winterperformance, insbesondere seine Schneegriffeigenschaften, sowie seine Handlingeigenschaften mit zunehmendem Laufstreifenabrieb zumindest im Wesentlichen unverändert bleiben.

Die gestellte Aufgabe wird erfindungsgemäß dadurch gelöst, dass die Wellenlänge der Wellenform des Einschnittes von der Laufstreifenaußenfläche in radialer Richtung bis zum Einschnittgrund um 5% bis 30% zunimmt.

Erfindungsgemäß gestaltete Einschnitte ermöglichen bei neuem Reifen aufgrund der vergleichsweise geringen Wellenlänge im radial äußeren Bereich der bzw. Profilblöcke eine gute Verzahnung der Profilelementteile bzw. Profilblockelemente in Querrichtung, wobei sich aufgrund der geringeren Umfangssteifigkeit beim Fahren gleichzeitig große Schneetaschen bilden. Da sich die Wellenlänge der Wellenform des Einschnittes mit zunehmender Einschnitttiefe vergrößert, ist der Verlauf des Einschnittes an der Oberfläche eines bereits abgeriebenen Profilelementes im Vergleich zum Neuzustand "gerader" bzw. "gestreckter", sodass bei abgeriebenen und somit steiferen Profilelementen weiterhin große Schneetaschen zur Verfügung stehen, wobei die damit einhergehende geringere Verzahnung der Einschnittwände durch die steifer gewordenen Profilelemente kompensiert wird. Durch die kontinuierliche Zunahme der Wellenlänge der Einschnitte Richtung Einschnittgrund sind die Winterperformance, insbesondere der Schneegriff, und die Handlingeigenschaften erfindungsgemäßer Fahrzeugluftreifen über alle Abriebszustände hinweg vom Neureifen bis zum Ende des Reifenlebens nahezu unverändert gut.

Bei einer bevorzugten Ausführungsform der Erfindung nimmt die Wellenlänge der Wellenform des Einschnittes von der Laufstreifenaußenfläche in radialer Richtung bis zum Einschnittgrund um 7% bis 25% zu. Diese Maßnahme ist besonders vorteilhaft, um über die Lebensdauer des Reifens bei zunehmendem Abrieb sowohl die Winterperformance als auch die Handlingeigenschaften weitgehend gleich gut zu erhalten.

Ein gemäß der Erfindung ausgeführter Einschnitt kann entweder über seine gesamte Erstreckung wellenförmig ausgeführt sein oder er kann sich aus einem wellenförmigen Hauptabschnitt, welcher insbesondere über zumindest 50% der Erstreckungslänge des Einschnittes verläuft, und zumindest einem in Draufsicht zumindest im Wesentlichen gerade verlaufenden Abschnitt, welcher insbesondere ein Endabschnitt des Einschnittes ist, zusammensetzen. Dadurch kann auf die Quersteifigkeit des jeweiligen Profilblockes gezielt Einfluss genommen werden, insbesondere kann derart berücksichtigt werden, ob erfindungsgemäß ausgeführte Einschnitte in schulterseitigen Profilblöcken oder in Profilelementen beziehungsweise Profilblöcken im mittleren Bereich des Laufstreifens angeordnet werden.

Besonders bevorzugt beträgt die Wellenlänge der Wellenform des Einschnittes bei neuem Reifen an der Laufstreifenaußenfläche 2,0 mm bis 12,0 mm, insbesondere 2,8 mm bis 7,0 mm.

Eine weitere Beeinflussung der Umfangs- und die Quersteifigkeit der Profilblöcke ermöglicht eine Ausführung, bei der der Einschnitt in seinem wellenförmigen Bereich eine von der Laufstreifenaußenfläche radial nach innen kontinuierlich abnehmende Amplitude aufweist. Dabei nimmt die Amplitude der Wellenform des Einschnittes bis zum Einschnittgrund um mindestens 30%, vorzugsweise um mindestens 70% ab. Die Abnahme der Amplitude kann sogar derart groß sein, dass der Einschnittgrund gerade verläuft. Auch diese Maßnahme schafft eine Möglichkeit, gezielt auf die Umfangs- und die Quersteifigkeit der Profilblöcke mit zunehmendem Abrieb des Laufstreifens Einfluss zu nehmen. Bei neuem Reifen beträgt die Amplitude der Wellenform des Einschnittes an der Laufstreifenaußenfläche vorzugsweise 0,5 mm bis 2,0 mm.

Weisen die Profilelemente, insbesondere die Profilblöcke, eine relativ geringe Umfangslänge auf, so können sie vorzugsweise lediglich einen einzigen erfindungsgemäß ausgeführten Einschnitt enthalten. Profilblöcke mit größerer Umfangslänge können jedoch mehr als einen erfindungsgemäß ausgeführten Einschnitt, insbesondere zwei erfindungsgemäß ausgeführte Einschnitte aufweisen, die in diesem Fall, wie es üblich ist, in Draufsicht betrachtet, zumindest im Wesentlichen parallel zueinander verlaufen.

Erfindungsgemäß ausgeführte Einschnitte können ferner die für Einschnitte in Laufstreifen von Fahrzeugluftreifen übliche Breite von bis zu 1,0 mm, insbesondere von 0,3 mm bis 0,8 mm, aufwiesen.

Weitere Merkmale, Vorteile und Einzelheiten der Erfindung werden nun anhand der Zeichnung, die schematisch ein Ausführungsbeispiel darstellt, näher beschrieben. Dabei zeigen
Fig. 1a bis Fig. 1c je eine Draufsicht auf einen Profilblock in drei unterschiedlichen Abriebszuständen und
Fig. 2a bis Fig. 2c je eine Ansicht einer Einschnittwand gemäß den Abriebszuständen aus Fig. 1a bis Fig. 1c.

Die Erfindung befasst sich mit einer besonderen Ausgestaltung von Einschnitten in Profilelementen von Laufstreifen, wie beispielsweise Profilblöcken oder Profilrippen, in Fahrzeugluftreifen, insbesondere Winterreifen für Personenkraftwagen.

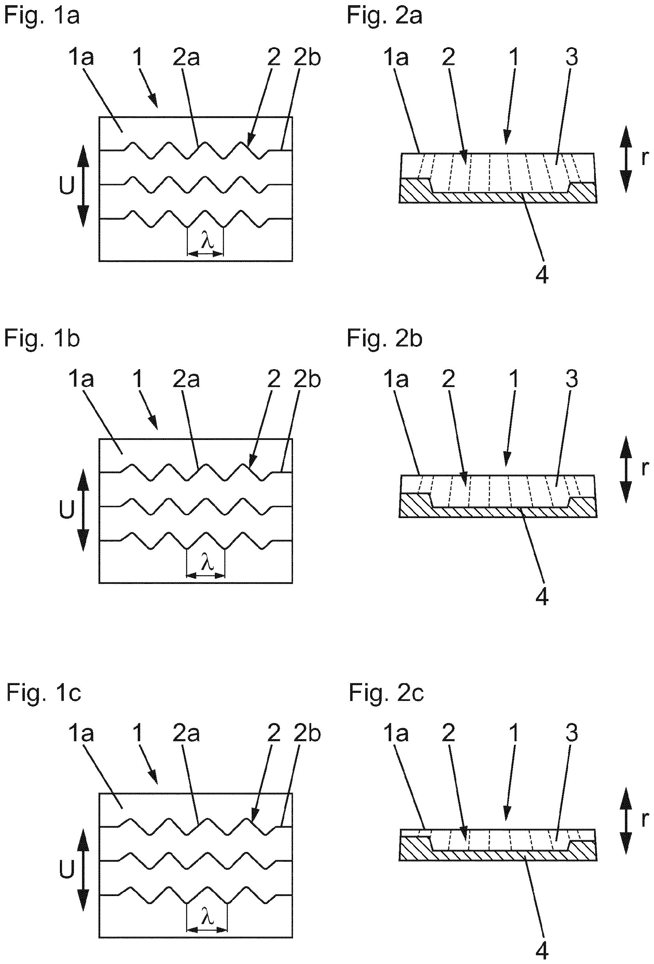

In Fig. 1a bis Fig. 1c ist je eine Draufsicht auf einen Profilblock 1 dargestellt, wobei in Fig. 1a der Profilblock 1 eines neuen Reifens, in Fig. 1b der Profilblock 1 in einem bereits geringfügig abgeriebenen Zustand und in Fig. 1c der Profilblock 1 in einem stark abgeriebenen Zustand gezeigt ist. Die Umfangsrichtung ist jeweils durch einen Doppelpfeil U gekennzeichnet. Die Blockoberfläche ist jeweils mit 1a bezeichnet.

Beim gezeigten Ausführungsbeispiel weist der Profilblock 1 drei im Wesentlichen parallel zueinander verlaufende, vorzugsweise zumindest im Wesentlichen übereinstimmend ausgeführte Einschnitte 2 auf, welche jeweils eine Breite von bis zu 1,0 mm, insbesondere von 0,3 mm bis 0,8 mm, aufweisen. Sämtliche Einschnitte 2 verlaufen vorzugsweise in Reifenquerrichtung oder unter einem spitzen Winkel von bis zu 45° zu dieser.

Bei der gezeigten Ausführungsform durchqueren die Einschnitte 2 den Profilblock 1 zwischen zwei im Wesentlichen parallel zueinander verlaufenden Randkanten des Profilblockes 1 und münden in die den Profilblock 1 dort begrenzenden, in Fig. 1a bis Fig. 1c nicht bezeichneten Rillen ein. Bei weiteren, nicht gezeigten Ausführungsvarianten kann nur ein Einschnitt 2 oder es können zwei oder mehr als drei Einschnitte 2 pro Profilblock 1 vorgesehen sein. Ferner kann bzw. können eines der Enden bzw. beide Enden zumindest eines vorgesehenen Einschnittes 2 innerhalb des Profilblockes 1 auslaufen.

Wie Fig. 2a bis Fig. 2c zeigen, verläuft jeder Einschnitt 2 ausgehend von der Blockoberfläche 1a zumindest im Wesentlichen in radialer Richtung ins Innere des Profilblockes 1 hinein und ist dort durch zwei korrespondierende Einschnittwände 3 und einen die beiden Einschnittwände 3 verbindenden Einschnittgrund 4, welcher zumindest im Wesentlichen parallel zur Blockoberfläche 1a verläuft, begrenzt. Die radiale Richtung ist jeweils durch den Doppelpfeil r gekennzeichnet.

Bei der in Fig. 1a bis Fig. 1c gezeigten Ausführungsvariante weist jeder Einschnitt 2 einen wellenförmigen, insbesondere sinusförmigen, Hauptabschnitt 2a und zwei gerade verlaufende Endabschnitte 2b auf, welche jeweils an eines der Enden des Hauptabschnittes 2a anschließen. Der wellenförmige Hauptabschnitt 2a erstreckt sich bei neuem Reifen insbesondere über zumindest 50 % der Erstreckungslänge des Einschnittes 2. Die Wellenform des Hauptabschnittes 2a setzt sich, wie nachfolgend noch genauer beschrieben wird, in radialer Richtung bis zum jeweiligen Einschnittgrund 4 (Fig. 2a bis Fig. 2c) fort.

Wie Fig. 1a bis Fig. 1c zeigen, liegt der Wellenform des Hauptabschnittes 2a eine Wellenlänge λ zugrunde, welche sich, wie aus Fig. 1a bis 1c ersichtlich, unter Verlängerung des Hauptabschnittes 2a radial nach innen kontinuierlich vergrößert. In Fig. 2a bis Fig. 2c ist der Verlauf der "Wellenberge" und der "Wellentäler" als gestrichelte Linien dargestellt.

Die Wellenlänge λ beträgt im Neuzustand des Reifens an der Blockoberfläche 1a 2,0 mm bis 12,0 mm, insbesondere 2,8 mm bis 7,0 mm, und nimmt in radialer Richtung bis zum Einschnittgrund 4 um 5% bis 30%, insbesondere um 7% bis 25%, zu.

Bei einer nicht gezeigten Ausführungsvariante der Erfindung kann die Wellenlänge λ im wellenförmigen Hauptabschnitt 2a variieren, wobei sie mindestens 2,0 mm und höchstens 12,0 mm, insbesondere 2,8 mm bis 7,0 mm, beträgt.

Bei einer weiteren, nicht gezeigten Ausführungsvariante der Erfindung nimmt zusätzlich die Amplitude der Wellenform im Hauptabschnitt 2a radial nach innen ab, sodass der Verlauf des Hauptabschnittes 2a mit zunehmender Tiefe des Einschnittes 2 stärker "gestreckt" ist. Die Amplitude an der Blockoberfläche 1a bei neuem Reifen beträgt vorzugsweise 0,5 mm bis 2,0 mm und nimmt um mindestens 30%, vorzugsweise um mindestens 70%, bis zum Einschnittgrund 4 ab. Dabei kann vorgesehen sein, die Einschnitte 2 derart zu gestalten, dass sie im wellenförmigen Hauptabschnitt 2a "Wellen" unterschiedlicher Amplituden aufweisen.

Bei sämtlichen Ausführungsvarianten können ferner die Einschnitte 2 über ihren gesamten Verlauf in Draufsicht wellenförmig ausgeführt sein.

### Bezugsziffernliste

- 1: Profilblock
- 1a: Blockoberfläche
- 2: Einschnitt
- 2a: Hauptabschnitt
- 2b: Endabschnitt
- 3: Einschnittwände
- 4: Einschnittgrund
- r: radiale Richtung
- U: Umfangsrichtung
- λ: Wellenlänge

## Patentansprüche

1. Fahrzeugluftreifen mit einem Laufstreifen mit Profilelementen (1), wie beispielsweise Profilblöcken oder Profilrippen, wobei zumindest ein Profilelement (1) mit zumindest einem, in Querrichtung verlaufenden, in Draufsicht zumindest über einen Abschnitt seiner Erstreckung wellenförmigen Einschnitt (2) mit zumindest einer Wellenlänge (λ) versehen ist, welcher sich unter Beibehalten der Wellenform in radialer Richtung (r) von der Laufstreifenaußenfläche ins Innere des Profilelementes (1) erstreckt, wobei sich die Wellenlänge (λ) der Wellenform des Einschnittes (2) ausgehend von der Laufstreifenaußenfläche radial nach innen kontinuierlich vergrößert.
**dadurch gekennzeichnet,**
**dass** die Wellenlänge (λ) der Wellenform des Einschnittes (2) von der Laufstreifenaußenfläche in radialer Richtung bis zum Einschnittgrund (4) um 5% bis 30% zunimmt.

2. Fahrzeugluftreifen nach Anspruch 1, **dadurch gekennzeichnet, dass** die Wellenlänge (λ) der Wellenform des Einschnittes (2) von der Laufstreifenaußenfläche in radialer Richtung bis zum Einschnittgrund (4) um 7% bis 25% zunimmt.

3. Fahrzeugluftreifen nach Anspruch 1 oder 2, **dadurch gekennzeichnet, dass** sich der Einschnitt (2) aus einem wellenförmigen Hauptabschnitt (2a) und zumindest einem in Draufsicht zumindest im Wesentlichen gerade verlaufenden Abschnitt (2b), welcher insbesondere ein Endabschnitt (2b) ist, zusammensetzt.

4. Fahrzeugluftreifen nach nach Anspruch 1 oder 2, **dadurch gekennzeichnet, dass** der Einschnitt (2), in Draufsicht betrachtet, über seine gesamte Erstreckung wellenförmig ausgeführt ist.

5. Fahrzeugluftreifen nach einem der Ansprüche 1 bis 4, **dadurch gekennzeichnet, dass** die Wellenlänge (λ) der Wellenform des Einschnittes (2) bei neuem Reifen an der Laufstreifenaußenfläche 2,0 mm bis 12,0 mm, insbesondere 2,8 mm bis 7,0 mm, beträgt.

6. Fahrzeugluftreifen nach einem der Ansprüche 1 bis 5, **dadurch gekennzeichnet, dass** der Einschnitt (2) in seinem wellenförmigen Bereich eine von der Laufstreifenaußenfläche radial nach innen kontinuierlich abnehmende Amplitude aufweist.

7. Fahrzeugluftreifen nach Anspruch 6, **dadurch gekennzeichnet, dass** die Amplitude der Wellenform des Einschnittes (2) bis zum Einschnittgrund (4) um mindestens 30%, vorzugsweise um mindestens 70%, abnimmt.

8. Fahrzeugluftreifen nach einem der Ansprüche 1 bis 7, **dadurch gekennzeichnet, dass** bei neuem Reifen die Amplitude der Wellenform des Einschnittes (2) an der Laufstreifenaußenfläche 0,5 mm bis 2,0 mm beträgt.

9. Fahrzeugluftreifen nach Anspruch 1 bis 8, **dadurch gekennzeichnet, dass** Profilblöcke (1) mit mehr als einem Einschnitt (2) vorgesehen sind, wobei die Einschnitte (2), in Draufsicht betrachtet, zumindest im Wesentlichen parallel zueinander verlaufen.

10. Fahrzeugluftreifen nach einem der Ansprüche 1 bis 9, **dadurch gekennzeichnet, dass** jeder Einschnitt (2) eine Breite von bis zu 1,0 mm, insbesondere von 0,3 mm bis 0,8 mm, aufweist.

## Claims

1. Pneumatic vehicle tyre comprising a tread with profile elements (1), such as for example profile blocks or profile ribs, wherein at least one profile element (1) is provided with at least one sipe (2) which runs in a transverse direction, in plan view is of an undulating form at least over a portion of its extent and has at least one wavelength (λ) which, while maintaining the undulating form, extends in a radial direction (r) from the outer surface of the tread into the interior of the profile element (1), wherein the wavelength (λ) of the undulating form of the sipe (2) continuously increases from the outer surface of the tread radially inwards,
**characterized**
**in that** the wavelength (λ) of the undulating form of the sipe (2) increases from the outer surface of the tread in a radial direction to the base of the sipe (4) by 5% to 30%.

2. Pneumatic vehicle tyre according to Claim 1,
**characterized**
**in that** the wavelength (λ) of the undulating form of the sipe (2) increases from the outer surface of the tread in a radial direction to the base of the sipe (4) by 7% to 25%.

3. Pneumatic vehicle tyre according to Claim 1 or 2,
**characterized**
**in that** the sipe (2) is made up of a main portion (2a) of an undulating form and at least one portion (2b) which in plan view runs at least substantially straight and is in particular an end portion (2b).

4. Pneumatic vehicle tyre according to Claim 1 or 2, **characterized in that**, seen in plan view, the sipe (2) is configured in an undulating form over its entire extent.

5. Pneumatic vehicle tyre according to one of Claims 1 to 4, **characterized in that**, on a new tyre, the wavelength (λ) of the undulating form of the sipe (2) at the outer surface of the tread is 2.0 mm to 12.0 mm, in particular 2.8 mm to 7.0 mm.

6. Pneumatic vehicle tyre according to one of Claims 1 to 5, **characterized in that** sipe (2) has in its undulating region an amplitude that continuously decreases radially inwards from the outer surface of the tread.

7. Pneumatic vehicle tyre according to Claim 6, **characterized in that** the amplitude of the undulating form of the sipe (2) decreases to the base of the sipe (4) by at least 30%, preferably by at least 70%.

8. Pneumatic vehicle tyre according to one of Claims 1 to 7, **characterized in that**, on a new tyre, the amplitude of the undulating form of the sipe (2) at the outer surface of the tread is 0.5 mm to 2.0 mm.

9. Pneumatic vehicle tyre according to Claims 1 to 8, **characterized in that** profile blocks (1) with more than one sipe (2) are provided, wherein, seen in plan view, the sipes (2) run substantially parallel to one another.

10. Pneumatic vehicle tyre according to one of Claims 1 to 9, **characterized in that** each sipe (2) has a width of up to 1.0 mm, in particular of 0.3 mm to 0.8 mm.

## Revendications

1. Pneumatique de véhicule comportant une bande de roulement avec des éléments profilés (1), comme par exemple des blocs profilés ou des nervures profilées, dans lequel au moins un élément profilé (1) est doté d'au moins une entaille (2) s'étendant en direction transversale et ondulée dans une vue en plan sur au moins une partie de son extension avec au moins une longueur d'onde (λ), qui s'étend en direction radiale (r) depuis la surface extérieure de la bande de roulement vers l'intérieur de l'élément profilé (1) tout en conservant la forme ondulée, dans lequel la longueur d'onde (λ) de la forme ondulée de l'entaille (2) augmente de façon continue à partir de la surface extérieure de la bande de roulement radialement vers l'intérieur, **caractérisé en ce que** la longueur d'onde (λ) de la forme ondulée de l'entaille (2) augmente de 5 % à 30 % à partir de la surface extérieure de la bande de roulement en direction radiale jusqu'au fond de l'entaille (4).

2. Pneumatique de véhicule selon la revendication 1, **caractérisé en ce que** la longueur d'onde (λ) de la forme ondulée de l'entaille (2) augmente de 7 % à 25 % à partir de la surface extérieure de la bande de roulement en direction radiale jusqu'au fond de l'entaille (4).

3. Pneumatique de véhicule selon la revendication 1 ou 2, **caractérisé en ce que** l'entaille (2) se compose d'une partie principale ondulée (2a) et d'au moins une partie au moins essentiellement droite (2b) dans une vue en plan, qui est en particulier une partie d'extrémité (2b).

4. Pneumatique de véhicule selon la revendication 1 ou 2, **caractérisé en ce que** l'entaille (2), dans une vue en plan, est de forme ondulée sur toute son extension.

5. Pneumatique de véhicule selon l'une quelconque des revendications 1 à 4, **caractérisé en ce que** la longueur d'onde (λ) de la forme ondulée de l'entaille (2) vaut, dans un pneu neuf, à la surface extérieure de la bande de roulement 2,0 mm à 12,0 mm, en particulier 2,8 mm à 7,0 mm.

6. Pneumatique de véhicule selon l'une quelconque des revendications 1 à 5, **caractérisé en ce que** l'entaille (2) présente, dans sa région ondulée, une amplitude qui diminue en continu radialement vers l'intérieur à partir de la surface extérieure de la bande de roulement.

7. Pneumatique de véhicule selon la revendication 6, **caractérisé en ce que** l'amplitude de la forme ondulée de l'entaille (2) diminue d'au moins 30 %, de préférence d'au moins 70 %, jusqu'au fond de l'entaille (4).

8. Pneumatique de véhicule selon l'une quelconque des revendications 1 à 7, **caractérisé en ce que** dans un pneu neuf l'amplitude de la forme ondulée de l'entaille (2) vaut 0,5 mm à 2,0 mm à la surface extérieure de la bande de roulement.

9. Pneumatique de véhicule selon l'une quelconque des revendications 1 à 8, **caractérisé en ce qu'**il est prévu des blocs profilés (1) présentant plus d'une entaille (2), dans lequel les entailles (2), dans une vue en plan, sont au moins essentiellement parallèles l'une à l'autre.

10. Pneumatique de véhicule selon l'une quelconque des revendications 1 à 9, **caractérisé en ce que** chaque entaille (2) présente une largeur valant jusqu'à 1,0 mm, en particulier de 0,3 mm à 0,8 mm.
